Europäisches Patentamt

European Patent Office

Office européen des brevets

(11) Publication number: **0 205 180**
**A1**

# EUROPEAN PATENT APPLICATION

(21) Application number: **86108059.6**

(22) Date of filing: **12.06.86**

(51) Int. Cl.4: **C08F 4/64** , C08F 4/02 , C08F 10/00

(30) Priority: **14.06.85 NL 8501716**

(43) Date of publication of application:
**17.12.86 Bulletin 86/51**

(84) Designated Contracting States:
**BE DE FR GB IT NL**

(71) Applicant: **STAMICARBON B.V.**
**Mijnweg 1**
**NL-6167 AC Geleen(NL)**

(72) Inventor: **Loontjens, Jacobus Antonius**
**Synagogplantsoen 76**
**NL-6231 KK Meerssen(NL)**
Inventor: **Muskens, Bernardus Joahanna**
**Gansbeek 64**
**NL-6166 JB Geleen(NL)**

(74) Representative: **van Golde, Lambertus Maria**
**Gerardus T. et al**
**OCTROOIBUREAU DSM P.O. Box 9**
**NL-6160 MA Geleen(NL)**

(54) Process for preparing virtually spherical catalyst particles and a process for polymerizing alkenes-1 and for copolymerizing alkenes-1 with each other and/or with ethylene while applying such spherical catalyst particles.

(57) The invention relates to a process for preparing virtually spherical catalyst particles for polymerizing alkenes-1 and for copolymerizing alkenes-1 with each other and/or with ethylene, which at least consist of a halogenated titanium compound, an electron donor and a magnesium halide, by means of a spray-drying technique, the process being characterized in that a suspension of an intimate mixture of magnesium halide and aluminium halide containing at least 1 part by weight of aluminium per 15 parts by weight of magnesium is subjected to spray-drying, the spray-dried material is subsequently treated with at least one electron donor and with at least one suitable solvent under such conditions that at least a part of the aluminium compound(s) present is washed out and the product thus obtained is treated with liquid titanium-IV-halide and to a process for polymerizing alkenes-1 and for copolymerizing alkenes-1 with each other and/or with ethylene while applying such spherical catalyst particles.

# PROCESS FOR PREPARING VIRTUALLY SPHERICAL CATALYST PARTICLES AND A PROCESS FOR POLYMERIZING ALKENES-1 AND FOR COPOLYMERIZING ALKENES-1 WITH EACH OTHER AND/OR WITH ETHYLENE WHILE APPLYING SUCH SPHERICAL CATALYST PARTICLES

The invention relates to a process for preparing virtually spherical catalyst particles for polymerizing alkenes-1 and for copolymerizing alkenes-1 with each other and/or with ethylene which at least consist of a halogenated titanium compound, an electron donor and a magnesium halide, by means of a spray-drying technique.

Such a process is known from the British patent specification 1.434.543. According to this patent specification. rounded or spherical catalyst particles are obtained by spray-drying a magnesium halide, preferably $MgCl_2.6 H_2O$, melted or dissolved in water, with known devices and methods to form particles of 1-300 $\mu m$, preferably 30-180 $\mu m$, while these particles are subsequently subjected to controlled dehydration until less than 4 moles crystal water per mole magnesium halide is left and hydrolysis of the magnesium halide is avoided, upon which the partly dehydrated particles are converted, preferably above 100¤C, in a liquid containing a halogenated titanium compound, preferably $TiCl_4$, and finally the non-converted titanium compound is removed. When using $MgCl_2.6 H_2O$ the melted chloride is sprayed into a current of hot air or hot nitrogen with sprayers having opening the chosen diameters of which are such that the rounded particles formed are between 10 and 300 $\mu m$ in size. According to this British patent specification another process for. preparing rounded or spherical catalyst particles consists in the spraying of a solution of a non-aqueous magnesium halide in an organic solvent by means of known methods in devices for obtaining spherical particles.

The solvent may be, for instance, an alcohol, an ether, a ketone or an ester with a boiling point between 60 and 150¤C. The spraying is then effected at a temperature and pressure at which the spherical particles formed are free of solvent not chemically bonded to the magnesium halide and have the desired particle size distribution, preferably between 1 and 300 $\mu m$. Subsequently the solvent bonded to the carrier is removed by heating at reduced pressure at a temperature higher than 150¤C and finally at 200-350¤C. The spherical particles thus obtained are then contacted with a halogenated titanium compound for the purpose of fixing the desired amount of titanium to the carrier. This can be done, for instance, by suspending the particles in an inert solvent in which the titanium compound is dissolved in the amount to be deposited and by subsequently evaporating the solvent.

The known process shows the following disadvantages. The known process is very complicated. It comprises many steps. Thus the first thing to do is to prepare the magnesium halide, which is usually done by halogenating an organic magnesium compound dissolved in an apolar solvent, such as heptane, and subsequently filtering off the magnesium halide deposit formed. This deposit must then be melted with all problems involved or be dissolved in a polar solvent and subsequently the melt or the solution must be spray-dried. The particles resulting from the spray-drying of the solution must then be laboriously cleared of the solvent still bonded to the magnesium halide after the spray-drying, which cleaning cannot be complete enough without affecting the crystal structure of the magnesium halide in consequence of the extreme conditions (for instance very high temperatures) required for this virtually complete cleaning. Further, if used as catalyst system for polymerizing alkenes-1 and for copolymerizing alkenes-1 with each other and/or with ethylene as customary in combination with a cocatalyst, for instance an organoaluminium component such as a trialkylaluminium compound or a dialkylaluminium halide, the catalyst particles prepared in this known manner show only a moderate activity, while the stereospecifity and the purity of the resulting polymer in relation to the catalyst residues (particularly titanium and halogen) are not quite satisfactory.

The process according to the invention meets these disadvantages, it is much simpler and catalyst system containing catalyst par ticles prepared by applying this process instead of catalyst particles prepared according to the known process shows a highly improved activity, stereospecificty and purity of the resulting polymer. According to the invention a process for preparing virtually spherical catalyst particles for polymerizing alkenes-1 and for copolymerizing alkenes-1 with each other and/or with ethylene, which at least consist of a halogenated titanium compound, an electron donor and a magnesium halide, by means of a spray-drying technique is characterized in that a suspension of an intimate mixture of magnesium halide and aluminium halide containing at least 1 part by weight of aluminium per 15 parts by weight of magnesium is subjected to spray-drying, the spray-dried material is subsequently treated with at least one electron donor and with at least one suitable solvent under such conditions that at least a part of the aluminium compound(s) present is washed out and the product thus obtained is treated with liquid titanium-IV-halide.

The object of the treatment with solvent is to remove at least a part of the aluminium compound(s) present so that cavities are formed in the catalyst particle, in which subsequently titanium-IV-halide can be incorporated.

The treatment with electron donor and with solvent preferably takes place simultaneously, e.g. by using for this purpose a treating liquid which contains a solution of electron donor in solvent.

Liquid titanium-IV-halide also means in this connection a solution of a titanium-IV-halide in a suitable solvent.

In the treatment of the spray-dried material with electron donor in the process according to the invention titanium-IV-halide may be present, for instance in the form of a complex with the electron donor.

Electron donors suitable for the process according to the invention are, for instance, oxygen-containing donors, such as alcohols, phenols, ketones, aldehydes, acid halides, carboxylic acids, esters, ethers and acid amides, or nitrogen-containing electron donors, such as ammonia, amines, nitriles, isocyanates and nitro compounds.

Specific examples of electron donors than can be used are alcohols with 1-18 carbon atoms per molecule, for instance methanol, ethanol, propanol, hexanol, stearylalcohol, benzylalcohol, phenylethylalcohol or cumylalcohol; phenols with 6-18 carbon atoms per molecule, for instance phenol, cresol, xylenol, ethyl phenol, propyl phenol, octyl phenol, dibutyl phenol, cumyl phenol or naphtol; ketones with 3-15 carbon atoms per molecule, for instance acetone, methylethylketone, methylisobutylketone, acetophenone or benzophenone; aldehydes with 2-15 carbon atoms per molecule, for instance ethanal, propanal, heptanal, benzaldehyde, tolualdehyde or naphthaldehyde; acid halides with 2-15 carbon atoms per molecule, for instance acetylchloride, benzoylchloride or toluylchloride; acid amides with 2-15 carbon atoms, for instance formamide, acetamide, benzamide or toluamide; amines with 2-18 carbon atoms per molecule, for instance methylamine, ethylamine, diethylamine, triethylamine, tributylamine, piperidine, tribenzylamine, aniline, pyridine, picoline or ethylenediamine; nitriles with 2-15 carbon atoms per molecule, for instance acetonitrile, benzonitrile or tolunitrile; or nitro compounds, for instance, nitrobenzene. Preference is given to ethers with 2-20 carbon atoms per molecule, for instance dimethylether, diethylether, di-n-butylether, di-i-amylether, tetrahydrofurane, anisole or diphenylether, and particularly organic esters with 2-40, particularly 2-18 carbon atoms per molecule. The acid component of the ester mostly contains 1-9 carbon atoms per molecule or is a natural fatty acid, while the alcohol component of the ester mostly contains 1-6 carbon atoms per molecule. Examples of suitable esters are methylformate, cyclohexylformate, ethylacetate, vinylacetate, amylacetate, 2-ethylhexylacetate, cyclohexylacetate, ethylpropionate, amylpropionate, methylbutyrate, ethylvalerate, methylchloracetate, ethyldichloracetate, methylmethacrylate, ethylacrylate, n-butylacrylate, ethylcrotonate, dimethylmaleate, ethylcyclohexanecarboxylate, methyl benzoate, ethyl benzoate, i-benzyl-benzoate, octyl benzoate, cyclohexyl benzoate, phenyl benzoate, benzyl benzoate, phenylethyl benzoate, methyl toluate, ethyl toluate, i-amyl toluate, methyl anisate, ethyl anisate, $\gamma$-butyrolactone, $\delta$-caprolactone, coumarin, phthalide and ethylene carbonate. Special preference is given to esters derived from aromatic acids, par ticularly esters of benzoic acid substituted or not substituted with alkyl groups or alkoxy groups. Alkyl esters having 1-4 carbon atoms per alkyl group, particularly methyl esters or ethyl esters of benzoic acid, o-or p-toluenecarboxylic acid, p-methoxybenzoic acid or phthalic acid should be given particular preference.

Titanium-IV-halides suitable for the process according to the invention are $TiBr_4$, $TiI_4$, Ti-(isobutoxy)$_2$Cl$_2$, Ti(phenoxy)Cl$_3$, Ti(o-methylphenoxy)Cl$_3$, titanium-IV-trichloridemonophenolate, titanium-IV-dichloridediphenolate, titanium-IV-trichloride-mono-p-cresolate, titanium-IV-monochloride-1-naphtholate, titanium-IV-trichloridemono-(p-chlorophenolate), titanium-IV-tribromide-mono-p-cresolate, titanium-IV-tribromide-mono(xylenolate-isomer mixture), titanium-IV-monoiodidetrianisolate and notably TiCl$_4$.

The intimate mixture of magnesium halide and aluminium halide to be applied must be at least virtually free of water and preferably also at least virtually free of magnesium oxide.

The expressions at least virtually free of water and at least virtually free of magnesium oxide are understood in this connection to mean that the concentration of water, respectively magnesium oxide, in the carrier material is insignificant, as far as water is concerned in any case lower than 0.2 % (wt), preferably 0.1 % (wt) at most, and as far as magnesium oxide is concerned in any case lower than 0.1, preferably 0.01 at most, calculated, per g carrier material, as mgeq of base titratable with dilute strong acid, for instance 0.1 N hydrochloric acid.

This intimate mixture of magnesium halide and aluminium halide may further contain minor amounts of other metal ions, for instance sodium, tin, silicon or germanium. The magnesium : aluminium weight ratio is preferably 1 : 1 to 10 : 1. The halogen is preferably chlorine, but may for instance also be bromine or iodine or a mixture of halogens.

According to a preferred mode of realizing the process according to the invention an intimate mixture of magnesium halide and aluminium halide is used obtained by converting a combination of an organic aluminium compound and an organic magnesium compound with a halogenating agent having the formula $RX_m$, where R is a hydrocarbon, a hydrogen atom or a halogen atom, X is a halogen atom and m is an integer from 1 to 10. The $RX_m$ compound may be a hydrogen halide, for instance in the form of the moisture-free gas, or for instance an aliphatic halogen compound with for instance 1-8 carbon atoms per molecule. Preference is given to the use of a hydrogen halide or otherwise an alkyl halide. Examples are methylchloride, methylene chloride, chloroform, ethyl bromide, ethylene dichloride, i-propylchloride, n-butyliodide, etc.

The halogenating agent may also be a free halogen and an interhalogen compound, for instance $Cl_2$, $Br_2$, $I_2$, $ICl$, $ICl_3$ or $BrCl$.

The organic aluminium compound preferably contains one or more hydrocarbon groups bonded direct to the metal. The hydrocarbon groups preferably contain 1-10 carbon atoms. Examples are trialkylaluminium or trialkenylaluminium compounds, for instance triethylaluminium, tripropylaluminium, triisobutylaluminium, triisoprenylaluminium, trihexylaluminium and trioctylaluminium; dialkylaluminiumhydrides, for instance diethylaluminiumhydride or diisobutylaluminiumhydride; dialkylaluminium halides, particularly a chloride or bromide, diethylaluminiumchloride and diethylaluminiumbromide being particularly suitable, but for instance di-n-butyl-aluminiumchloride or methyl-n-butylaluminiumchloride can be used also; and -(mono)alkylaluminiumdihalides, for instance ethylaluminiumdichloride, n-butylaluminiumdichloride or n-hexylaluminiumdibromide. If a halogen-containing organic aluminium compound is used, the halogen is preferably the same as in the halogenating agent used. Trialkylaluminium compounds are preferred.

The organic magnesiumcompound may be for instance a dialkylmagnesium or an alkylmagnesium halide. Again the hydrocarbon groups preferably contain 1-10 carbon atoms. Examples are ethylmagnesiumchloride, n-butylmagnesiumchloride, i-propylmagnesiumbromide, n-decylmagnesiumiodide, ethyl-n-butylmagnesium, di-n-butylmagnesium, di-i-amylmagnesium and di-n-octylmagnesium.

The conversion of the organic metal compounds in the intimate mixture of magnesium halide and aluminium halide is very conveniently effected by precipitating this mixture from a solution of the organic metal compounds in a suitable solvent. Examples of suitable solvents are aliphatic, cycloaliphatic, aromatic and mixed aromatic/aliphatic hydrocarbons with 3-8 carbon atoms per molecule, which hydrocarbons are preferably inert under the reaction conditions, for instance butane, i-butane, n-hexane, n-heptane, cyclohexane, benzene, toluene and the xylenes.

Further details regarding this preferred process are described in the British patent publication 2.047.255 A. In the preferred process a very important improvement of the activity of the catalyst at high stereospecificity can be reached.

Examples of preferred solvents used for the solvent treatment of the spray-dried material are aliphatic, cycloaliphatic, aromatic and mixed aromatic/aliphatic hydrocarbons with 4-12 carbon atoms per molecule, such as butane, isobutane, n-hexane, n-heptane, cyclohexane, tetralin, decalin, benzene, toluene and the xylenes. Halogenated hydrocarbons can be used also, for instance $CCl_4$ or $C_2Cl_6$. If so desired, the solvent may contain harmless additives. For improving the activity of the catalyst particles in addition to one or more solvents and eventually one or more electron donors the treating liquid preferably also contains at least one alcohol, preferably an unsubstituted phenol or a phenol subsituted with one or more halogen groups and/or with one or more alkyl groups and/or alkoxy groups with, for instance, 1-6 carbon atoms per group. Examples of suitable phenols are the cresols, the methoxyphenols, the xylenols, the ethylphenols, the cumylphenols and the naphthols. Most preference is given to o-cresol. When alcohol is used in addition to solvent preferably a solvent-(s) : alcohol(s) weight ratio in the treating liquid in the range of 1:1 to 2000:1, more preferably in the range of 2:1 to 200:1, is applied. The treatment(s) take(s) place at a temperature of, for instance, 250-425 K, preferably 330-380 K. The pressure is not critical and is, for instance, 10-1000 kPa. The amount of solvent is, for instance, 5-1000, preferably 10-100 grammes per gramme spray-dried material.

The product obtained after the electron donor and solvent treatment(s) is treated further with a liquid titanium-IV-halide. As stated earlier, the liquid titanium-IV-halide may be an undiluted titanium-IV-halide which is liquid of itself, or a liquid solution of a titanium-IV-halide in a suitable solvent. The solvent used for this titanium-IV-halide may be the same as mentioned above for the treatment of the spray-dried material.

The treatment with the liquid titanium-IV-halide takes place at a temperature of, for instance, 250-425 K, preferably 320-370 K. The pressure is not critical and ·is, for instance, 10-1000 kPa. The amount of liquid titanium halide compound, expressed as mmole Ti per gramme product obtained after the electron donor and solvent treatment(s), is, for instance, 1-1000 mmoles/g, preferably 10-100 mmoles/g. Amounts larger than 1 mole/g can be used, but offer no advantage.

After this treatment the virtually spherical catalyst particles formed are preferably re-washed with an organic solvent. As such the same solvent are suitable as mentioned above for the washing-out.

In the finished polymerizion catalyst the virtually spherical catalyst particles are used in combination with an organo-metallic component derived from a metal from one of the groups I-III of the Periodic System with a hydrocarbon group bonded direct to the metal. Examples are trialkylaluminium compounds, alkylaluminiumalkoxides, alkylaluminiumhydrides, alkylaluminium halides, dialkylzinc compounds and dialkylmagnesium compounds. Of these the organoaluminium compounds are particularly suitable. Examples of the organoaluminium compounds are trialkylaluminium compounds or trialkenylaluminium compounds, for instance triethylaluminium, tripropylaluminium, triisobutylaluminium, triisoprenylaluminium, trihexylaluminium and trioctylaluminium; alkylaluminium siloxides; alkylaluminium compounds, in which a number of the aluminium atoms are linked via an oxygen or nitrogen atom, for instance $(C_2H_5)_2AlOAl(C_2H_5)_2$, $(i-C_4H_9)_2AlOAl(i-C_4H_9)_2$ or $(C_2H_5)AlNHAl(C_2H_5)_2$; dialkylaluminiumhydrides such as diethylaluminiumhydride or diisobutylaluminiumhydride; dialkylaluminium halides, particularly a chloride or bromide, diethylaluminiumchloride and diethylaluminiumbromide being very suitable, but also other dialkyl aluminium halides with preferably 1-10 carbon atoms in the alkyl group, such as for instance di-n-butylaluminiumchloride and methyl-n-butylaluminiumchloride, can be used; and dialkylaluminiumalkoxides or dialkylaluminiumphenoxides, for instance diethylethoxyaluminium or diethylphenoxyaluminium. Most preference should be given to the trialkylaluminium compounds.

The organometallic compound may also contain a trialkylaluminium compound as well as a dialkylaluminium halide or a mixture of a dialkylmagnesium compound and a monoalkylaluminium dihalide. The alkyl groups of the metalalkyl compounds preferably contain 1-10 carbon atoms each or are a palmityl group or stearyl group.

The organometallic compound preferably comprises a complex of an organic metal compound, in particular a trialkylaluminium compound, with an ester of an oxygen-containing organic acid. The ester may be the same as those that can be used also in the titanium component, particularly again the esters of aromatic carboxylic acids. Preferably a part, for instance 50-90 %, of the organix metal compound is present in a non-complexed state.

The Al : Ti atom ratio is generally between 50 and 1000; the molecule atom ratio of totally bonded Lewis base in the catalyst to Ti is generally between 1 and 200.

The invention also comprises the process for polymerizing alkenes-1 and for copolymerizing alkenes-1 with each other and/or with ethylene while applying a catalyst system comprising virtually spherical catalyst particles consisting at least of a halogenated titanium compound, an electron donor and a magnesium halide prepared by means of a spray-drying technique and an organometallic component derived from a metal from one of the groups I-III of the Periodic System of the Elements, the process being characterized in that the virtually spherical catalyst particles have been formed by subjecting a suspension of an intimate mixture of a magnesium halide and an aluminium halide containing at least 1 part by weight of aluminium per 15 parts by weight of magnesium to spray-drying, subsequently treating the spray-dried material with at least one electron donor and with at least one suitable solvent under such conditions that at least a part of the aluminium compound(s) present is washed out and treating the product thus obtained with liquid titanium-IV-halide. These virtually spherical catalyst particles have preferably also been re-washed with an organic solvent. As such the same solvents are suitable in this process as mentioned above in the washing out.

The polymerization process according to the invention is applied particularly in the stereospecific polymerization of alkenes-1 with 3-6 carbon atoms per molecule, such as propylene, butylene-1, 4-methylpentene-1 and hexene-1, and in the copolymerization of these alkenes-1 with each other and/or with ethylene. Both copolymers with random distribution of the various monomer units and block copolymers can be prepared. If ethylene is used as comonomer, it is mostly incorporated by polymerization in minor amounts, for instance 30 % (wt) at most, more specifically between 1 and 20 % (wt). The process according to the invention is particularly important for the preparation of isotactic polypropylene, random copolymers of propylene with minor amounts of ethylene and block copolymers from propylene and ethylene. For the preparation of block copolymers any desired order of monomer addition can be applied. The polymers obtained by this process are virtually spherical and thus have e.g. much better flow properties than the non-spherical and rough polymer particles obtained by using the normal non-spherical catalyst particles.

The circumstances in which the polymerization reaction in the polymerization process according to the invention is carried out do not differ from those known in the art. The reaction can be carried out in the gas phase or in the presence of a dispersant. The dispersant may be inert or be a monomer in a liquid form. Examples of suitable dispersants are aliphatic hydrocarbons with 3-8 carbon atoms per molecule, such as propylene, butylene-1, butane, isobutane, n-hexane, n-heptane, cyclohexane, benzene, toluene and the xylenes.

In the polymerization in liquid phase the concentration of the titanium component should preferably be set at about 0.001-0.5 mmole, calculated as titanium atoms, and the concentration of the organometallic compound at about 0.1-50 mmoles, both per litre of liquid phase.

The polymerization temperature is mostly between 190 and 475 K, preferably between 310 and 375 K. The pressure may be between for instance 100 and 3000 kPa.

If so desired the molecular weight of the polymer can be adjusted during the polymerization, for instance by working in the presence of hydrogen or of another known molecular weight modifier.

The polymerization reaction can be carried out batchwise as well as continuously.

Example I

I.A. Preparation of the titanium component

Into a nitrogen-flushed three-neck flask provided with a mechanical stirrer and a reflux condenser 700 ml of a solution is introduced containing 0.26 mole ethyl butyl magnesium and 0.08 mole triethyl aluminium. A flow of dry HCl gas is introduced, resulting in the formation of a yellowish suspension. The suspension obtained is spray-dried using a Büchi mini-spraydryer 190 under nitrogen. The spray-dried material obtained is virtually spherical.

About 5 g of the spray-dried material is suspended in 100 ml of a mixture of toluene and di-isoamyl ether, the di-isoamyl ether content of which is such that the suspension formed contains 1 molecule di-isoamyl ether per molecule aluminium. The temperature is raised to 353 K and maintained at this level for 2 hours. After this the suspension is filtered off and the solid substance is washed with water-free gasoline at 333 K.

The solid substance is subsequently suspended in 40 g TiCl₄. After the solid substance has been in contact with TiCl₄ for 2 hours at 353 K, the suspension is filtered off and washed with water-free gasoline at 333 K. The titanium component thus obtained is finally dried.

I.B. Polymerization

To a stainless steel reactor flushed with dry nitrogen and provided with a mechanical stirrer 2.3 l water-free gasoline is supplied. Separately 2.00 mmoles triethyl aluminium, 0.5 mmole diethyl aluminium chloride, 0.5 mmole methyl-p-toluate and 121 mg of the titanium component obtained according to I.A. are fed to the reactor. Subsequently propylene is supplied up to a partial pressure of 200 KPa and the temperature of the reactor is brought to 293 K and maintained at this level for 10 minutes. After this prepolymerization the supply of hydrogen and propylene to the reactor is such that partial pressure of respectively 10 and 640 kPa are reached. The temperature of the reactor is brought to and maintained at 353 K. After 2 hours polymerization the polymer is separated off by centrifugation.

The polymerization activity is 8340 g PP/g titanium component, the soluble polymer content is 9.2 % and the bulk density is 0.31 g/ml. The polymer particles obtained are virtually spherical.

Example II

II.A. Preparation of the titanium component

About 5 g of the spray-dried material of the first part of I.A. is suspended in a mixture of 100 ml toluene, 8 ml o-cresol and such a quantity of di-isoamyl ether that the suspension formed contains 133 molecules di-isoamylether per 100 molecules aluminium. The temperature is raised to 353 K and maintained at this level for 2 20 hours. After this the suspension is filtered off and the solid substance is washed with water-free gasoline at 333 K.

The solid substance is subsequently suspended in 40 g TiCl₄. After the solid substance has been in contact with TiCl₄ for 2 hours at 353 K, the suspension is filtered off and washed with water-free gasoline at 333 K. The titanium component thus obtained is finally dried.

II.B. Polymerization

To a stainless steel reactor flushed, with dry nitrogen and provided with a mechanical stirrer 2.3 l water-free gasoline is supplied. Separately 2.00 mmoles triethyl aluminium, 0.5 mmole diethyl aluminium chloride, 0.5 mmole methyl-p-toluate and 97 mg of the titanium component obtained according to II.A. are fed to the reactor. The polymerization takes place in the same way as in example I.B.

The polymerization activity is 11240 gPP/g titanium component, the soluble polymer content is 11.4 % and the bulk density is 0.30 g/ml. The polymer particles obtained are virtually spherical.

## COMPARATIVE EXPERIMENT

### A.A. Preparation of the titanium component

Into a nitrogen-flushed three-neck flask provided with a mechanical stirrer and a reflux condenser 700 ml of a solution is introduced containing 0.26 mole ethyl butyl magnesium and 0.005 mol triethyl aluminium per litre. A flow of dry HCl gas is introduced, resulting in the formation of a yellowish suspension. The suspension obtained is spray-dried using the same spray-dryer as used in I.A. The spray-dried material is not at all spherical and thus not suited for obtaining virtually spherical polymer particles.

## Claims

1. Process for preparing virtually spherical catalyst particles for polymerizing alkenes-1 and for copolymerizing alkenes-1 with each other and/or with ethylene, which at least consist of a halogenated titanium compound, an electron donor and a magnesium halide, by means of a spray-drying technique, characterized in that a suspension of an intimate mixture of magnesium halide and aluminium halide containing at least 1 part by weight of aluminium per parts by weight of magnesium is subjected to spray-drying, the spray-dried material is subsequently treated with at least one electron donor and with at least one suitable solvent under such conditions that at least a part of the aluminium compound(s) present is washed out preferably at a temperature of 250-425 K, particularly 330-380 K, and the product thus obtained is treated with liquid titanium-IV-halide, preferably TiCl$_4$, preferably at a temperature of 250-425 K, particularly 320-370 K.

2. Process according to claim 1, characterized in that 5-1000 grammes, preferably 10-100 grammes, solvent is used per gramme spray-dried material.

3. Process according to claim 1 or 2, characterized in that the product obtained after the electron donor and solvent treatment(s) is treated with an amount of liquid titanium-IV-halide, expressed as mmole Ti per gramme product obtained, of 1-1000 mmoles/g, preferably of 10-100 mmoles/g

4. Process according to any one of claims 1-3, characterized in that the intimate mixture of magnesium halide and aluminium halide has been obtained by converting a combination of an organic aluminium compound and an organic magnesium compound with a halogenating agent of the formular RX$_m$ where R is a hydrocarbon residue, a hydrogen atom or a halogen atom, X is a halogen atom and m is an integer from 1-10.

5. Process according to any one of claims 1-4, characterized in that the intimate mixture of magnesium halide and aluminium halide has been obtained by precipitation of a solution of an organic magnesium compound and an organic aluminium compound in a suitable solvent.

6. Process according to any one of claims 1-5, characterized in that the magnesium : aluminium weight ratio in the intimate mixture of magnesium halide and aluminium halide is 1 : 1 to 10 : 1.

7. Process according to any one of claims 1-6, characterized in that the finished virtually spherical catalyst particles contain titanium, magnesium and aluminium in a weight ratio of 1 : (0.5-20) : (0.01-5), preferably 1 : (0.5-2.5) : (0.1-1).

8. Process for polymerizing alkenes-1 and for copolymerizing alkenes-1 with each other and/or with ethylene while applying a catalyst system comprising virtually spherical catalyst particles consisting at least of a halogenated titanium compound, an electron donor and a magnesium halide prepared by means of a spray-drying technique and an organometallic component derived from a metal from one of the groups I-III of the Periodic System of the Elements, characterized in that the virtually spherical catalyst particles have been formed by subjecting a suspension of an intimate mixture of a magnesium halide and an aluminium halide containing at least 1 part by weight of aluminium per 15 parts by weight of magnesium to spray-drying, subsequently treating the spray-dried material with at least one electron donor and with at least one suitable solvent under such conditions that at least a part of the aluminium compound(s) present is washed out and treating the product thus obtained with liquid titanium-IV-halide.

9. Process according to claim 8, characterized in that the organometallic component contains a complex of an organic metal compound with an ester of an oxygen-containing organic acid.

10. Virtually spherical catalyst particle(s), resp. polymer, obtained by means of the process according to any one of the preceding claims.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,A | US-A-3 953 414 (P. GALL et al.) <br> * Claims * <br> --- | 1 | C 08 F 4/64 <br> C 08 F 4/02 <br> C 08 F 10/00 |
| A | EP-A-0 093 464 (STAMICARBON) <br> * Claims * <br> --- | 1 | |
| A | EP-A-0 099 284 (BP CHEMIE) <br> * Claims * <br> ----- | 1 | |

| | |
|---|---|
| | TECHNICAL FIELDS SEARCHED (Int. Cl. 4) |
| | C 08 F |

The present search report has been drawn up for all claims

| Place of search | Date of completion of the search | Examiner |
|---|---|---|
| THE HAGUE | 18-08-1986 | DE ROECK R.G. |